(19) Europäisches Patentamt / European Patent Office / Office européen des brevets

(11) **EP 3 515 970 B1**

(12) **FASCICULE DE BREVET EUROPEEN**

(45) Date de publication et mention de la délivrance du brevet:
**03.11.2021 Bulletin 2021/44**

(21) Numéro de dépôt: **17768470.1**

(22) Date de dépôt: **20.09.2017**

(51) Int Cl.:
*C08J 3/07* (2006.01)  *C04B 24/24* (2006.01)
*C08F 26/04* (2006.01)  *C08G 59/50* (2006.01)
*C23F 11/173* (2006.01)

(86) Numéro de dépôt international:
**PCT/EP2017/073804**

(87) Numéro de publication internationale:
**WO 2018/054991 (29.03.2018 Gazette 2018/13)**

(54) **PROCEDE D'OBTENTION DE POLYMERES CATIONIQUES A TENEUR REDUITE EN HALOGENURES**

VERFAHREN ZUR HERSTELLUNG VON KATIONISCHEN POLYMEREN MIT VERRINGERTEM HALIDGEHALT

METHOD FOR OBTAINING CATIONIC POLYMERS HAVING A REDUCED HALIDE CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2016 FR 1658855**

(43) Date de publication de la demande:
**31.07.2019 Bulletin 2019/31**

(73) Titulaire: **S.P.C.M. SA**
**42160 Andrézieux Bouthéon (FR)**

(72) Inventeurs:
• **KIEFFER, Johann**
  **42163 Andrézieux Cedex (FR)**
• **FAVERO, Cédrick**
  **42163 Andrézieux Cedex (FR)**
• **ROUX, Christophe**
  **42163 Andrézieux Cedex (FR)**

(74) Mandataire: **Lavoix**
  **62, rue de Bonnel**
  **69448 Lyon Cedex 03 (FR)**

(56) Documents cités:
**EP-A1- 2 643 364**       **WO-A1-2012/071223**
**WO-A1-2012/134768**    **US-B2- 7 994 265**

EP 3 515 970 B1

**Description**

La présente invention a pour objet un procédé d'obtention de polymères cationiques hydrosolubles de haute densité de charge cationique présentant une teneur en halogénures réduite.

La présente invention a également pour objet l'utilisation des polymères cationiques hydrosolubles susmentionnés comme additifs dans des compositions à base de liants minéraux ou de dérivés du gypse, ou dans le traitement des circuits aqueux ouverts, fermés ou semi-fermés.

Les polymères cationiques hydrosolubles de haute densité de charge et de faible viscosité sont connus de l'homme du métier et peuvent être obtenus par diverses méthodes.

On peut par exemple citer la réaction de polycondensation de composés aminés di-fonctionnels, tels que les alkylènes-amines, ou de mono-amines primaires ou secondaires avec un composé di-fonctionnel choisi parmi les di-époxydes, les épihalohydrines ou les composés di-halogénés.

Afin de satisfaire le critère de haute densité de charge cationique, il est connu de US 3 738 945 et US 3 725 312 d'utiliser préférentiellement des entités monomères de masse moléculaire la plus faible possible ; l'ammoniac ou les amines mono ou di-alkylées étant les entités préférées.

Toutefois, l'utilisation d'ammoniac ou d'amines mono-alkylées engendre des polymères structurés (branchés), même si leur viscosité est inférieure à 200 cps, dont les charges cationiques sont stériquement peu accessibles, rendant ces structures branchées peu préférées.

Ainsi, pour obtenir des polymères linéaires de faible masse moléculaire, l'homme du métier utilise préférentiellement les amines di-alkylées, dont la préférée est la diméthylamine.

Pour la réaction de polycondensation, les épihalohydrines, et de préférence l'épichlorhydrine, sont généralement préférées aux di-époxydes, car elles sont de plus faible masse moléculaire et permettent ainsi l'obtention de polymères cationiques de haute densité de charge cationique. Toutefois, les polymères cationiques ainsi obtenus sont caractérisés par une teneur en halogénures élevée.

L'utilisation de composés dihalogénés tels que le dichloroéthane est également connue de US 4 057 580 pour la préparation de polymères caractérisés par une teneur en halogénures cationiques très élevée.

La réaction de polymérisation radicalaire d'au moins un monomère éthylénique comportant une fonction ammonium quaternaire pouvant être choisi parmi le chlorure d'acrylamidopropyltriméthyl ammonium (APTAC), le chlorure de méthacrylamidopropyltriméthyl ammonium (MAPTAC), l'acrylate de diméthylaminoéthyle (ADAME) ou le méthacrylate de diméthylaminoéthyle (MADAME), tous ces composés étant quaternisés par des dérivés alkyles halogénés ou des dialkyles sulfates est également connue de l'homme du métier.

Une autre méthode de préparation de polymères cationiques hydrosolubles de haute densité de charge cationique et de faible viscosité connue de l'homme du métier est la réaction de polymérisation radicalaire d'au moins un monomère allylique tel qu'un halogénure de diallyldialkyl ammonium. Parmi les monomères allyliques, les halogénures de diallyldiméthyl ammonium permettent d'obtenir les polymères de plus haute densité de charge, le monomère allylique le plus accessible sur le marché étant le chlorure de diallyldiméthyl ammonium (DADMAC). Les polymères contenant du DADMAC sont caractérisés par une teneur en chlorures élevée. En particulier, les homopolymères de DADMAC sont caractérisés par des teneurs en chlorure supérieures à 10% en poids de polymère, typiquement supérieures à 20%.

Tous ces polymères cationiques hydrosolubles de haute densité de charge sont couramment utilisés comme additifs dans des compositions à base de liants inorganiques (sulfates de calcium sous leur forme plus moins hydratée tels que le ciment, le plâtre, le gypse ou l'anhydrite) ou comme coagulants dans des circuits fermés ou semi-fermés (exemple : procédé papetier, minier).

Plus précisément, dans le domaine de la construction, les compositions contenant du ciment, des agrégats, de la chaux, du plâtre, des laitiers tels que les bétons, les mortiers, les enduits, et donc à base de liants minéraux, aussi appelés liants hydrauliques et aériens, contiennent souvent des argiles, tout comme les boues de forage utilisées pour la cimentation de puits en vue de l'extraction de pétrole et de gaz. Or, les argiles ont une structure lamellaire qui peut absorber de l'eau ou certains additifs induisant ainsi de mauvaises performances des matériaux de construction/forage (fissures dues au gonflement des argiles, problème d'écoulement, de prise en gel, etc.).

Il est alors connu d'utiliser des polymères cationiques hydrosolubles de haute densité de charge cationique comme agent de modération de l'effet des argiles (aussi appelés inertant des argiles). Ainsi, les documents US 6 352 952, US 2013/0035417 et EP 2 414 460 décrivent l'utilisation de polymères cationiques pour modérer l'effet des argiles dans les compositions cimentaires.

Lorsque les argiles ne sont pas gonflantes, elles peuvent avoir un effet délétère sur les performances des matériaux de construction. Il est également connu de US 2013/0035417 d'utiliser des polymères cationiques en tant qu'agent de modération de l'effet de ces argiles non gonflantes.

En outre, il est connu que la présence d'argiles dans des compositions à base de liants hydrauliques - et plus particulièrement pour les matériaux de construction dérivés du gypse (sulfate de calcium sous forme anhydre, hémi-hydrate ou di-hydrate) - peut induire une dégradation des performances de ces matériaux. Pour y remédier, il est connu de US 8 906 986 d'utiliser des amines quaternaires en tant qu'agent de modération de l'argile pour conserver les performances du super-plastifiant contenu dans la formulation.

Enfin, l'utilisation de polymères cationiques fonctionnalisés résultant de la polycondensation entre une épihalohydrine et une dialkylamine pour modérer l'effet des argiles sur les agrégats est connue de US 2015/0065614.

Or, tous les polymères cationiques hydrosolubles décrits dans l'état de la technique pour ces utilisations sont caractérisés par une teneur élevée en halogénures, ce qui est problématique. En effet, la présence d'halogénures, et en particulier celle de chlorures, dans des compositions entraîne la corrosion de matériaux métalliques, tels que les armatures métalliques, avec lesquels ils sont au contact (Corrosion of Steel in Concrete: Prevention, Diagnosis, Repair, 2nd Edition, Luca Bertolini).

De plus, quand ces polymères cationiques hydrosolubles sont utilisés dans des circuits fermés ou semi-fermés, on peut être confronté à une accumulation d'halogénures au sein du circuit, générant ainsi des problèmes de conductivité et/ou de précipitation des sels présents dans le circuit.

Il existe donc à ce jour un besoin de préparer des polymères cationiques hydrosolubles présentant une haute densité de charge cationique, une faible viscosité et une teneur en halogénures réduite et permettant de diminuer, voire même de supprimer, le phénomène de corrosion et/ou de précipitation rencontré lors de leur utilisation.

Un objectif de la présente invention est donc de fournir un procédé de préparation de polymères cationiques de densité de charge cationique élevée, de faible viscosité et présentant une teneur en halogénures réduite.

Un autre objectif de la présente invention est de disposer de ces polymères cationiques hydrosolubles afin de diminuer, voire même de supprimer, le phénomène de corrosion et/ou de précipitation rencontré lors de leur utilisation.

Ainsi, la présente invention concerne un procédé d'obtention d'une solution aqueuse de polymères cationiques hydrosolubles P1 caractérisés par une teneur en halogénures inférieure à 10% en masse de polymère, une viscosité à 25°C inférieure à 200 cps, cette viscosité étant déterminée pour une solution aqueuse de polymères P1 concentrée à 50% en masse, et une densité de charge cationique supérieure ou égale à 4 méq.g$^{-1}$, ledit procédé comprenant les étapes suivantes :

a) l'addition, à une température comprise entre 0°C et 120°C, d'au moins un composé de formule (I) à une solution aqueuse d'au moins un polymère cationique hydrosoluble P2 dont la teneur en halogénures est supérieure à 10% en masse de polymère, la viscosité à 25°C est inférieure à 200 cps, cette viscosité étant déterminée pour une solution aqueuse de polymères P2 concentrée à 50% en masse, et la densité de charge cationique supérieure ou égale à 4 méq.g$^{-1}$, le composé de formule (I) étant défini par la formule : $R^1\text{-}COO^-\ Y_1^+$, dans laquelle :

- $R^1$ représente un atome d'hydrogène ou une chaine alkyle saturée, linéaire ou ramifiée, comprenant de 1 à 8 atomes de carbone, pouvant contenir au moins un atome d'azote et/ou d'oxygène, ladite chaîne pouvant en outre être substituée par 1 à 4 fonctions carboxylates de formule -COR ;
- $Y_1^+$ représente un cation de métal alcalin, un ammonium de formule $R^2\text{-}NH_3^+$, ou un ammonium quaternaire de formule $R^3\text{-}N^+(R^4)(R^5)(R^6)$ ;
- R représente un groupement OH ou un groupe $O^-Y_2^+$ ;
- $Y_2^+$ représente un cation de métal alcalin ou un ammonium de formule $R^2\text{-}NH_3^+$ ;
- $R^2$ représente un atome d'hydrogène ou une chaîne alkyle saturée, linéaire ou ramifiée, comprenant de 1 à 4 atomes de carbone ; et
- $R^3$, $R^4$, $R^5$ et $R^6$ représentent, indépendamment les uns des autres, une chaîne alkyle saturée, linéaire ou ramifiée, comprenant de 1 à 4 atomes de carbone ;

pour obtenir un mélange ;

b) l'agitation du mélange obtenu à l'étape a) pendant au moins 5 minutes pour obtenir un mélange agité ;

c) la diminution de la température du mélange agité obtenu à l'issue de l'étape b) à une température comprise entre -10°C et 50°C pour obtenir un mélange refroidi ; et

d) la séparation liquide/solide du mélange refroidi obtenu à l'issue de l'étape c) afin d'obtenir une solution aqueuse de polymères cationiques P1.

Selon l'invention, un polymère est dit « cationique » lorsqu'il porte au moins un groupement cationique. En tant que groupement cationique, on peut citer par exemple les groupements ammonium ou phosphonium.

Selon l'invention, un polymère est dit « hydrosoluble » lorsque, concentré à 50 g.L$^{-1}$, il permet l'obtention d'une solution aqueuse ne contenant pas de particule insoluble après dissolution sous agitation.

Selon l'invention, la « teneur en halogénures » est définie comme étant le rapport de l'ensemble des masses molaires des halogénures sur la masse molaire du polymère cationique.

Par exemple, la teneur en halogénures peut être mesurée par chromatographie ionique ou analyse élémentaire.

De préférence selon l'invention, la teneur en halogénures est une teneur en chlorures.

Par exemple selon l'invention, la teneur en chlorures des polymères cationiques hydrosolubles P1 ou P2 est quantifiée par chromatographie ionique. L'appareil utilisé est un Metrohm Ion Chromatography 850 Professional IC équipé d'un détecteur 896 Conductivity et d'une colonne Metrosep A Supp5 250/4.0. Les conditions d'analyse consistent en un débit de 0,7 mL/min, une durée d'analyse de 35 min, une température de colonne de 35°C, un volume d'injection de 25 $\mu$L et une phase mobile constituée d'une solution aqueuse de 3,2 mM de carbonate de sodium et de 1 mM de bicarbonate de sodium. L'étalon interne est du bicarbonate de sodium.

Selon l'invention, la « viscosité » est la viscosité dynamique mesurée à 25°C et pour un cisaillement de 7,34 s$^{-1}$.

Selon l'invention, la viscosité des polymères cationiques hydrosolubles P1 ou P2 peut être déterminée pour une solution aqueuse contenant 50% en masse de polymères P1 ou P2 au moyen d'un appareil de type Kinexus Pro2 de la société Malvern©. L'appareil est équipé d'un module cône plan 2°. 2,3 mL de la solution de polymères P1 ou P2 sont disposés dans la cellule de mesure régulée à 25°C et dont le cisaillement est 7,34 s$^{-1}$. La viscosité retenue est la moyenne de 10 mesures de viscosité réalisées toutes les 20 secondes.

Selon l'invention, la densité de charge cationique d'un polymère est définie comme étant le rapport du nombre total de charges positives dudit polymère sur sa masse moléculaire.

Selon l'invention, la densité de charge cationique des polymères cationiques hydrosolubles peut être déterminée par un dosage colorimétrique au polyvinyle sulfate de potassium (PVSK) en présence d'un indicateur coloré (bleu de toluidine) selon le protocole suivant :

Une solution de polymère cationique est préparée à une concentration de 5 g.L$^{-1}$ dans de l'eau déionisée (solution mère). 1 g de cette solution mère est prélevé puis dilué dans 100 mL d'eau déionisée (solution 1). De l'acide chlorhydrique à 0,1 N est ajouté à la solution 1 afin d'ajuster le pH à 4. Ensuite, 3 gouttes d'une solution aqueuse de bleu de toluidine à 0,1 % de concentration sont ajoutées. La solution 2 est ainsi obtenue.

En parallèle, une burette graduée d'une solution de PVSK à N/400 (de facteur correctif f connu) est préparée, puis additionnée goutte à goutte à la solution 2. Le dosage est terminé lorsque la solution 2 vire de la couleur bleue à violette, et que la couleur violette persiste quelques secondes. Le volume en millilitres de solution de PVSK est noté V.

La densité de charge cationique du polymère est alors déterminée par la formule suivante :

$$E = \frac{V \times 10^{-3}}{5 \times 10^{-3}} \times \frac{1}{400} \times f \quad (eq/g)$$

$$E = \frac{V}{2} \times f \quad (meq/g)$$

La densité de charge cationique s'exprime en méq.g$^{-1}$.

Selon l'invention, la « séparation liquide/solide » est une étape qui consiste à séparer les composés insolubles de la solution de polymères P1.

Selon l'invention, les « composés insolubles » sont les composés qui ne sont pas solubles dans l'eau et résultent du procédé de l'invention.

Par exemple, la teneur en composés insolubles contenus dans la solution de polymères cationiques hydrosolubles P1 est déterminée par filtration de la solution de polymères P1 sur un filtre dont la porosité est inférieure ou égale à 6 $\mu$m. Suite à cette filtration, le filtre ayant recueilli les particules insolubles est placé dans un four à 500°C pendant 2 heures. Le pourcentage de composés insolubles contenus dans la solution de polymère P1 est défini comme étant le rapport de la masse des particules récupérées sur le filtre après étuvage, par la masse de la solution de polymère P1 avant filtration.

De préférence, les polymères P1 de l'invention sont des polymères cationiques hydrosolubles caractérisés par une teneur en chlorures inférieure à 10% en masse de polymère, une viscosité à 25°C inférieure à 200 cps, cette viscosité étant déterminée pour une solution aqueuse de polymères P1 concentrée à 50% en masse, et une densité de charge cationique supérieure ou égale à 4 méq.g$^{-1}$.

De préférence, les polymères P1 de l'invention sont des polymères cationiques hydrosolubles caractérisés par une teneur en chlorures inférieure à 10% en masse de polymère, une viscosité à 25°C inférieure à 200 cps, cette viscosité étant déterminée pour une solution aqueuse de polymères P1 concentrée à 50% en masse, une densité de charge cationique supérieure ou égale à 4 méq.g$^{-1}$ et une teneur massique en composés insolubles inférieure à 2% par rapport à la masse totale de polymère.

De préférence, les polymères P1 de l'invention sont des polymères cationiques hydrosolubles caractérisés par une teneur en chlorures inférieure à 10% en masse de polymère, une viscosité à 25°C inférieure à 200 cps, cette viscosité étant déterminée pour une solution aqueuse de polymères P1 concentrée à 50% en masse et par une densité de charge cationique supérieure ou égale à 5 méq.g$^{-1}$. De préférence, les polymères P1 de l'invention sont des polymères cationiques hydrosolubles caractérisés par une teneur en chlorures inférieure à 10% en masse de polymère, une viscosité à 25°C inférieure à 200 cps cette viscosité étant déterminée pour une solution aqueuse de polymères P1 concentrée à 50% en masse, une densité de charge cationique supérieure ou égale à 5 méq.g$^{-1}$ et une teneur massique en composés insolubles inférieure à 2% par rapport à la masse totale de polymère.

Selon un mode de réalisation préféré, les polymères P1 de l'invention sont des polymères cationiques hydrosolubles caractérisés par une densité de charge cationique supérieure ou égale à 6 méq.g$^{-1}$.

La viscosité à 25°C des polymères P1 obtenus selon le procédé de l'invention est inférieure à 200 cps, cette viscosité étant déterminée pour une solution aqueuse de polymères P1 concentrée à 50% en masse. De préférence, la viscosité à 25°C des polymères P1 est inférieure à 150 cps, de préférence inférieure à 100 cps, cette viscosité étant déterminée pour une solution aqueuse de polymères P1 concentrée à 50% en masse pour une concentration en polymère hydrosoluble actif de 50% dans la solution.

Les polymères P2 utilisés dans le procédé de l'invention sont des polymères cationiques hydrosolubles caractérisés par une teneur en chlorures supérieure à 10% en masse de polymère, une viscosité à 25°C inférieure à 200 cps, cette viscosité étant déterminée pour une solution aqueuse de polymères P2 concentrée à 50% en masse, et une densité de charge cationique supérieure ou égale à 4 méq.g$^{-1}$.

De préférence, la solution aqueuse d'au moins un polymère cationique hydrosoluble P2 utilisée dans l'étape a) du procédé de l'invention est concentrée au plus à 80% en masse par rapport au poids total de la solution. La viscosité à 25°C d'une solution aqueuse d'au moins un polymère cationique hydrosoluble P2 concentrée à 80% en masse peut être supérieure à 2 000 cps.

La densité de charge cationique des polymères P2 utilisés dans l'étape a) du procédé de l'invention est supérieure ou égale à 4 méq.g$^{-1}$. De préférence, la densité de charge cationique des polymères P2 est supérieure ou égale à 6 méq.g$^{-1}$.

La viscosité à 25°C des polymères P2 utilisés dans l'étape a) du procédé de l'invention est inférieure à 200 cps. De préférence, la viscosité à 25°C des polymères P2 est inférieure à 100 cps, et encore plus préférentiellement inférieure à 50 cps, cette viscosité étant déterminée pour une solution aqueuse de polymères P2 concentrée à 50% en masse.

De manière préférée selon l'invention, lors de l'étape a), le rapport du nombre de charges anioniques du composé de formule (I) sur le nombre de charges cationiques du polymère cationique hydrosoluble P2 est compris entre 0,2:1 et 5:1, de préférence entre 0,6:1 et 2:1.

Le nombre de charges anioniques du composé de formule (I) est défini comme étant la somme du nombre de fonctions -COO$^-$Y$_1^+$ et -COO$^-$Y$_2^+$.

De manière avantageuse selon l'invention, la température de l'étape a) est comprise entre 0°C et 120°C, de préférence entre 10°C et 95°C, et encore plus préférentiellement entre 15°C et 80°C.

De manière préférée selon l'invention, le composé de formule (I) utilisé lors de l'étape a) est tel que R$^1$ représente un atome d'hydrogène ou un groupement méthyle.

De préférence, dans la formule (I) susmentionnée, Y$_1^+$ est choisi parmi les cations de métaux alcalins, et notamment parmi le sodium, le potassium ou le lithium.

De préférence, dans la formule (I) susmentionnée, Y$_1^+$ est NH$_4^+$.

De manière avantageuse selon l'invention, le composé de formule (I) est choisi parmi le formate de sodium, le formate de potassium, l'acétate de sodium et l'acétate de potassium. Préférentiellement, le composé de formule (I) est choisi parmi le formate de potassium et l'acétate de potassium.

De manière également avantageuse selon l'invention, les polymères cationiques hydrosolubles P2 utilisés dans l'étape a) du procédé de l'invention sont choisis parmi les produits de la polymérisation radicalaire d'au moins un monomère éthylénique comportant une fonction ammonium quaternaire tel que le chlorure d'acrylamidopropyltriméthyl ammonium (APTAC), le chlorure de méthacrylamidopropyltriméthyl ammonium (MAPTAC), l'acrylate de diméthylaminoéthyle (ADAME) ou le méthacrylate de diméthylaminoéthyle (MADAME) quaternisé par des dérivés alkyles halogénés.

De manière préférée selon l'invention, les polymères cationiques hydrosolubles P2 utilisés dans l'étape a) du procédé de l'invention peuvent être choisis parmi les produits de la polymérisation radicalaire de monomères allyliques tels que les halogénures de diallyldialkyl ammonium.

De manière préférée selon l'invention, le polymère P2 obtenu par polymérisation radicalaire utilisé dans l'étape a) du procédé est issu de la polymérisation d'au moins un monomère de type halogénure de diallyldialkylammonium. Préférentiellement, le polymère P2 utilisé dans l'étape a) est obtenu par polymérisation radicalaire du chlorure de diallyldiméthylammonium (DADMAC).

De manière avantageuse, le polymère cationique hydrosoluble P2 employé dans l'étape a) du procédé selon l'invention peut être obtenu par copolymérisation radicalaire avec au moins un monomère non ionique choisi parmi le (méth)acrylamide, les N,N-dialkyles (méth)acrylamide, les esters d'alkyle hydroxyle d'acide (méth)acrylique, la N-vinyle pyrrolidone, le N-vinyle formamide, les méthacrylates de polyéthylène glycol ou de propylène glycol, les isoprényles de polyéthylène glycol ou de propylène glycol, les éthers de polyéthylène glycol et de vinyloxybutyle, les allyl éthers de polyéthylène glycol ou de propylène glycol. De préférence selon l'invention, le polymère hydrosoluble P2 employé dans l'étape a) du procédé selon l'invention peut être obtenu par polymérisation radicalaire d'au moins un monomère non ionique tel que l'acrylamide.

De manière avantageuse, le polymère cationique hydrosoluble P2 peut être obtenu par copolymérisation radicalaire avec au moins un monomère anionique choisi parmi les monomères comprenant au moins une fonction carboxylique, par exemple les acides (méth)acrylique, itaconique, fumarique, maléique et leurs sels, les monomères comprenant une fonction acide sulfonique, par exemple les acides 2-acrylamido-2-méthylpropane sulfonique (ATBS), vinylsulfonique, allylsulfonique, styrènesulfonique et leurs sels. De préférence selon l'invention, le polymère hydrosoluble P2 employé dans l'étape a) du procédé selon l'invention peut être obtenu par polymérisation radicalaire d'au moins un monomère anionique choisi parmi l'acide acrylique et l'acide 2-acrylamido-2-méthylproprane sulfonique et leurs sels.

La polymérisation radicalaire permettant d'obtenir les polymères cationiques hydrosolubles P2 peut être initiée par différentes techniques connues de l'homme de métier. Une première technique est d'utiliser des agents initiateurs comme des peroxydes, des persulfates, des dérivés azoïques ou des couples oxydants/réducteurs. D'autres techniques peuvent être utilisées, telles que la photo-initiation, la polymérisation radicalaire contrôlée, la polymérisation radicalaire par transfert d'atomes (ATRP), la polymérisation radicalaire en présence de nitroxydes (NMP) ou la polymérisation radicalaire contrôlée par transfert de chaîne réversible par addition-fragmentation (RAFT).

La demande internationale WO 2008/000766 décrit les agents de contrôle utilisés pour la polymérisation radicalaire contrôlée de type RAFT. De manière préférée selon l'invention, quand ce type de polymérisation est choisi, les agents de contrôle pour la polymérisation RAFT peuvent être choisis parmi les xanthates, les dithioesters, les trithiocarbonates, les dithiocarbamates, les dithiocarbazates et les dithiophosphoroesters.

De manière avantageuse selon l'invention, l'agent de contrôle préféré utilisé pour préparer les polymères cationiques hydrosolubles P2 par polymérisation de type RAFT est le O-éthyl-S-(1-méthoxycarbonyl éthyl) xanthate.

De manière avantageuse selon l'invention, le polymère cationique hydrosoluble P2 mis en œuvre dans l'étape a) est un produit de polycondensation d'au moins une épihalohydrine et d'au moins une amine secondaire, de préférence il s'agit du produit de polycondensation de l'épichlorhydrine et de la diméthylamine.

De préférence, quand cette réaction est utilisée pour préparer P2, le ratio stœchiométrique entre la diméthylamine et l'épichlorhydrine est compris entre 1:0,99 et 1:0,80, préférentiellement entre 1:0,95 et 1:0,85. Ce ratio est par ailleurs décrit dans le brevet US 4 569 991.

De manière préférée selon l'invention, lors de l'étape b) du procédé de l'invention, le mélange obtenu à l'issue de l'étape a) est laissé sous agitation pendant au moins 5 minutes, de préférence entre 5 minutes et 360 minutes, et plus avantageusement entre 30 minutes et 360 minutes.

De manière préférée selon l'invention, lors de l'étape b) du procédé de l'invention, le mélange obtenu à l'issue de l'étape a) est agité mécaniquement ou magnétiquement.

De manière préférée selon l'invention, lors de l'étape c) du procédé de l'invention, la température du mélange agité issu de l'étape b) est avantageusement abaissée entre - 10°C et 50°C et de préférence entre 0°C et 40°C.

De préférence, l'étape d) de séparation liquide/solide du procédé de l'invention est une décantation ou une filtration. De préférence, lorsque cette séparation liquide/solide est réalisée par filtration, elle l'est au moyen de centrifugeuses, de filtres à bandes, de filtres presse ou de filtres à plateaux.

De préférence selon l'invention, la séparation liquide/solide de l'étape d) permet d'obtenir une solution aqueuse de polymère cationique hydrosoluble P1 comprenant moins de 2% en masse, plus préférentiellement moins de 1% en masse de composés insolubles.

La quantité de composés insolubles est directement liée à la quantité d'halogénures contenue dans la solution aqueuse de polymère P1. Ainsi, plus la teneur en insolubles sera réduite, plus la teneur en halogénures dans ce polymère sera réduite.

De manière avantageuse, le procédé selon l'invention peut comprendre une étape e), ultérieure à l'étape d) du procédé de l'invention. De préférence, le procédé selon l'invention comprend une étape e) de séchage de la solution aqueuse de polymères cationiques hydrosolubles P1 obtenue à l'issue de l'étape d).

De préférence, à l'issue de l'étape e), les polymères cationiques hydrosolubles P1 sont sous forme solide. Toute méthode de séchage connue de l'homme du métier peut être employée pour réaliser l'étape e) du procédé de l'invention. De préférence, la méthode de séchage est choisie parmi les méthodes de séchage suivantes : par atomisation, sur tambour sécheur ou par ondes électromagnétiques telles que les micro-ondes, les ondes infra-rouge ou les ondes haute fréquence.

Une fois séchés, les polymères cationiques insolubles P1 sous forme solide obtenus à l'issue de l'étape e) du procédé selon l'invention peuvent être dissous dans une solution aqueuse à la concentration désirée pour leur utilisation ultérieure. Les polymères cationiques hydrosolubles P1 peuvent également être sous forme de poudre. Lorsqu'utilisés sous forme de poudre, les polymères P1 peuvent soit se solubiliser partiellement ou totalement, soit rester sous forme solide lors de leur utilisation.

La présente invention concerne également l'utilisation des polymères cationiques hydrosolubles P1 susceptibles d'être obtenus par le procédé selon l'invention et dont la teneur en halogénures est inférieure à 10 % en masse de polymère, la viscosité à 25°C inférieure à 200 cps, cette viscosité étant déterminée pour une solution aqueuse de polymères P1 concentrée à 50% en masse, la densité de charge supérieure ou égale à 4 méq.g$^{-1}$ et la teneur massique en composés insolubles inférieure à 2% en masse.

Selon un mode de réalisation préféré, l'invention concerne également l'utilisation des polymères cationiques hydrosolubles P1 susceptibles d'être obtenus par le procédé selon l'invention et dont la densité de charge supérieure ou égale à 6 méq.g$^{-1}$.

De manière préférée selon l'invention, les polymères cationiques hydrosolubles P1 obtenus par le procédé de l'invention sont utilisés comme additifs dans des compositions à base de liants minéraux ou de dérivés du gypse.

En particulier, la présente invention concerne l'utilisation de polymères P1 tels que définis ci-dessus, présentant une densité de charge supérieure ou égale à 6 méq.g$^{-1}$, comme agent de modération de l'effet des argiles dans une composition à base de liants minéraux ou de dérivés de gypse.

Selon l'invention, une composition à base de liants minéraux est définie comme étant une composition comprenant au moins un liant minéral tel que le sulfate de calcium pouvant être sous forme plus ou moins hydratée (ciment, plâtre, gypse ou anhydrite). Selon l'invention, une telle composition peut être utilisée dans le domaine de la construction. Selon l'invention, une telle composition peut également comprendre au moins une argile.

Selon l'invention, un dérivé du gypse est défini comme étant du sulfate de calcium sous forme anhydre, hémi-hydrate ou di-hydrate. Ainsi, selon l'invention, une composition à base de dérivés du gypse est définie comme étant une composition utilisée dans le domaine de la construction et comprenant du sulfate de calcium sous forme anhydre, hémi-hydrate ou di-hydrate. De manière également préférée, les polymères cationiques hydrosolubles P1 obtenus par le procédé de l'invention sont utilisés pour le traitement des circuits aqueux ouverts, fermés ou semi-fermés. De préférence, les polymères cationiques hydrosolubles P1 obtenus par le procédé de l'invention sont utilisés pour le traitement des circuits fermés ou semi-fermés.

Selon l'invention, les polymères cationiques hydrosolubles P1 obtenus selon le procédé de l'invention peuvent être utilisés dans le domaine de la construction, en tant qu'additif dans des agrégats (sable, gravillons, cailloux, ciments), des bétons ou des mortiers (enduits, plâtres).

Selon l'invention, un circuit fermé ou semi-fermé est tout circuit pouvant contenir des éléments métalliques (conduits) et tel qu'au moins une partie du flux sortant est recyclée dans le flux entrant. Peuvent être cités en tant que circuit fermé ou semi-fermé les installations des procédés utilisés dans les secteurs de la construction, de l'électronique et du traitement du bois (autoclavage).

Selon l'invention, un circuit ouvert est tout circuit pouvant contenir des éléments métalliques et tel que le flux sortant n'est pas recyclé dans le flux entrant. Peuvent être cités en tant que circuits ouverts, les stations de traitement des eaux pluviales, ménagères ou industrielles, les installations des procédés papetiers ou miniers, les installations de forage et celles de traitement des métaux.

Les polymères cationiques hydrosolubles P1 obtenus par le procédé de l'invention sont caractérisés par une teneur en halogénures réduite. Ainsi, un avantage à leur utilisation dans les circuits aqueux ouverts, fermés ou semi-fermés est leur corrosivité réduite vis-à-vis des métaux, notamment vis-à-vis des aciers entourés par la formulation contenant les polymères tels que les fers à béton armé. Un avantage supplémentaire à l'utilisation des polymères cationiques hydrosolubles P1 obtenus par le procédé de l'invention à leur utilisation dans les circuits fermés ou semi-fermés est l'accumulation réduite d'halogénures dans ces circuits, du fait de la teneur réduite en halogénures de ces polymères.

De manière avantageuse selon l'invention, lorsque les polymères issus du procédé de l'invention sont utilisés comme additif dans une composition à base de liants minéraux ou de dérivés de gypse, ils ont préférentiellement un rôle d'agent de modération de l'effet des argiles.

Selon l'invention l'expression « agent de modération de l'effet des argiles » signifie que l'agent employé permet de réduire l'effet délétère des argiles sur les matériaux de construction.

Ainsi, l'invention concerne également l'utilisation des polymères cationiques hydrosolubles P1 susceptibles d'être obtenus selon le procédé de l'invention, dont la teneur en halogénures est inférieure à 10 % en masse de polymère, la viscosité à 25°C inférieure à 200 cps, cette viscosité étant déterminée pour une solution aqueuse de polymères P1 concentrée à 50% en masse, et la densité de charge supérieure ou égale à 4 méq.g$^{-1}$ en tant qu'agent de modération de l'effet des argiles dans une composition à base de liants minéraux ou de dérivés de gypse. De préférence, l'invention concerne l'utilisation des polymères cationiques hydrosolubles P1 comme agent de modération de l'effet des argiles dans une composition cimentaire.

De manière préférée selon l'invention, les polymères cationiques hydrosolubles P1 susceptibles d'être obtenus selon le procédé de l'invention sont particulièrement efficaces en tant qu'agent de modération de l'effet des argiles dans des compositions comprenant les argiles suivantes :

- les argiles gonflantes de type 2:1 telle que la smectite, ou de type 1:1 telle que le kaolin ou de type 2:1:1 telle que la chlorite ;
- le silicate de magnésium et/ou aluminium ;
- les phyllo silicates ayant une structure lamellaire ;
- les argiles amorphes.

Sans se limiter à une liste, la présente invention concerne également les argiles généralement présentes dans le sable, telles que la montmorillonite, l'illite, la kaolinite ou encore la muscovite.

Les argiles peuvent, entre autres, absorber de l'eau et induire de mauvaises performances des matériaux de construction. Lorsque les polymères cationiques et hydrosolubles P1 susceptibles d'être obtenus selon le procédé de l'invention sont utilisés comme agent de modération de l'effet d'argile, ils permettent, entre autres, d'éviter le gonflement des argiles qui pourraient alors induire des fissures fragilisant toute construction. Ces polymères P1 permettent également d'éviter des problèmes de rhéologie des formulations qui pourraient provenir de l'adsorption des agents superplastifiants et/ou de l'eau par les argiles.

De manière préférée selon l'invention, les polymères cationiques hydrosolubles P1 susceptibles d'être obtenus selon le procédé de l'invention sont utilisés dans des compositions comprenant des argiles et agissent en tant qu'agent modérateur de l'effet de ces argiles. La concentration en polymères P1 dans ces compositions est comprise entre 0,1% et 100% en masse par rapport à la masse sèche d'argiles contenues dans la composition hydraulique à traiter. De préférence, la concentration des polymères P1 est comprise entre 0,5% et 50%, et plus avantageusement entre 1% et 30%.

Optionnellement, les compositions cimentaires à base de liants minéraux ou de dérivés de gypse, dans lesquelles sont ajoutés les polymères P1 susceptibles d'être obtenus selon le procédé de l'invention incluent d'autres additifs choisis parmi les agents limitant l'apport d'eau (lignosulfonate, adduits naphtalène sulfonate formaldéhyde, adduits mélamine sulfonate formaldéhyde), les superplastifiants (polymères peigne à motif polycarboxylate contenant des groupement oxyde d'éthylène et/ou oxyde de propylène), le gluconate, les agents retardateurs de prise, les agents accélérateurs de prise, les agents anti-mousse, les agents de surface ou les agents de chélation de métaux lourds.

De manière préférée selon l'invention, quand les polymères cationiques hydrosolubles P1 susceptibles d'être obtenus selon le procédé de l'invention sont utilisés dans le domaine de la construction, ils sont appliqués directement par pulvérisation d'une solution de polymères P1 sur des agrégats, présents sur bande laveuse ou sur mélangeur. Alternativement selon l'invention, lorsque le polymère issu du procédé de l'invention est utilisé comme additif d'une composition à base de liants inorganiques, il est ajouté directement à la composition au sein d'une centrale à béton, d'une bétonnière ou en usine de préfabrication de matériaux, ou est apporté par le liant inorganique utilisé pour préparer la composition.

L'invention concerne également l'utilisation des polymères cationiques et hydrosolubles P1 susceptibles d'être obtenus selon le procédé de l'invention comme agent de coagulation des élastomères.

L'efficacité du procédé de l'invention et de l'utilisation des polymères issus dudit procédé sont illustrés à la lumière des exemples qui vont suivre, mais ne sont pas limités à ceux-ci.

**EXEMPLES**

Exemple 1 : Préparation d'un polymère P1 caractérisé par une teneur en chlorures inférieure à 10% en masse de polymère et issu de la polycondensation de l'épichlorhydrine et de la diméthylamine

Dans un réacteur de 1 litre équipé d'une double enveloppe, d'un condenseur, d'une agitation mécanique et d'une sonde de température, sont ajoutés 272 g de diméthylamine à 60% en masse (source : Sigma Aldrich) et 331 g d'eau. Ensuite, 319 g d'épichlorhydrine (source : Sigma Aldrich) sont ajoutés goutte à goutte pendant 3 heures, la température étant maintenue à 70-80°C.
Environ 80 g d'eau à 50°C sont ensuite ajoutés au mélange pour ajuster la concentration du polymère ainsi formé à 50% en masse.

Le produit de polycondensation obtenu - nommé polymère A - est caractérisé par une densité de charge cationique égale à 7 méq.g$^{-1}$, une viscosité à 25°C de 30 cps, cette viscosité étant déterminée pour une solution aqueuse de polymère A concentrée à 50% en masse, et une teneur en chlorures de 25% en masse de polymère ; ces valeurs étant mesurées selon les protocoles tels que définis préalablement.

500 g du polymère A sont introduits dans un réacteur thermostaté de 1 litre équipé d'une double enveloppe, d'un agitateur magnétique, d'un condenseur, et d'une sonde de température avant que 183 g d'acétate de potassium (source: Sigma Aldrich) soient introduits. Le mélange réactionnel est chauffé à 80°C, et maintenu sous agitation pendant 2 heures, puis refroidi à 25°C et filtré sur une essoreuse RC30 (fournisseur : Rotabel) équipée d'un filtre de porosité 6 μm en polypropylène et permet l'obtention d'un produit de polycondensation - nommé polymère B - contenant 0,5 % d'insolubles.

Le polymère B est caractérisé par une viscosité à 25°C de 35 cps, cette viscosité étant déterminée pour une solution aqueuse de polymère B concentrée à 49,6% en masse, une densité de charge cationique de 6.2 méq.g$^{-1}$ et une teneur en chlorures égale à 8% en masse de polymère ; ces valeurs étant mesurées selon les protocoles tels que définis plus haut.

Exemple 2 : Préparation d'un polymère P1 de chlorure de diallyldiméthylammonium caractérisé par une teneur en chlorures inférieure à 10% en masse de polymère.

Dans un réacteur de 1 litre équipé d'une double enveloppe, d'un condenseur, d'une agitation mécanique et d'une sonde de température, sont ajoutés 95 g d'eau, 135 g de chlorure de diallyldiméthylammonium (DADMAC) à 64% massique dans l'eau (source : SNF©) et 17 g d'hypophosphite de sodium à 50% massique dans l'eau. Des solutions d'hypophosphite de sodium et de persulfate de sodium sont préparées en mélangeant respectivement 13 g d'eau avec 13 g d'hypophosphite de sodium (source : Sigma Aldrich) et 100g d'eau avec 13g de persulfate de sodium (source: Sigma Aldrich). 536 g de DADMAC (à 64% massique dans l'eau), ainsi que les solutions d'hypophosphite de sodium et de persulfate de sodium sont additionnés progressivement dans le réacteur de 1 litre, pendant 2 heures.

L'homopolymère de DADMAC obtenu - nommé polymère C - est caractérisé par une densité de charge de 6 méq.g$^{-1}$, une viscosité à 25°C de 52 cps, cette viscosité étant déterminée pour une solution aqueuse de polymère C concentrée à 51% en masse, et une teneur en chlorures de 22% en masse de polymère ; ces valeurs étant mesurées selon les protocoles tels que définis préalablement.

Ensuite, 500 g de polymère C sont introduits dans un réacteur thermostaté de 1 litre équipé d'une double enveloppe, d'un agitateur magnétique, d'un condenseur, et d'une sonde de température, dans lequel 152 g d'acétate de potassium sont ajoutés. Le mélange réactionnel est chauffé à 85°C, puis laissé sous agitation pendant 4 heures avant d'être refroidi à 30°C. Le mélange obtenu est filtré sur une essoreuse RC30 (fournisseur : Rotabel) équipée d'un filtre de porosité 6 μm, en polypropylène permettant l'obtention d'un produit polymère de DADMAC - nommé polymère D - contenant 1 % d'insolubles.

Le polymère D est caractérisé par une viscosité à 25°C égale à 53 cps, cette viscosité étant déterminée pour une solution aqueuse de polymère D concentrée à 50% en masse, une densité de charge cationique de 5.4 méq.g$^{-1}$ et une teneur en chlorures égale à 7 % en masse de polymère ; ces valeurs étant selon les protocoles tels que définis plus haut.

Exemple 3 : Utilisation de polymères cationiaues hydrosolubles en tant qu'agent de modération d'argile dans un test d'écoulement béton (slump test)

La performance des polymères cationiques hydrosolubles P1 de la présente invention est évaluée dans l'écoulement d'une composition cimentaire (selon la norme ASTM C1611).

Le « slump test » consiste à positionner un cône au centre d'une plaque, sur laquelle est dessiné un cercle, remplir le cône (ouvert à ses deux bases) de la composition dont on veut mesurer l'écoulement, l'araser et le démouler. Le béton s'écoule alors plus ou moins selon sa rhéologie. L'étalement est la moyenne des distances selon deux axes perpendiculaires entre le centre du cercle et l'extrémité de la position formée par le béton écoulé.

La formulation cimentaire est composée de :

- Ciment (source : Lafarge) dosée à 445 kg/m$^3$
- Sable (normalisé, de densité 1485 kg/m$^3$) dosée à 885 kg/m$^3$.
- Argile de type bentonite
- Eau
- Superplastifiant polyacide carboxylique (Floset™ SH7 de la société SNF©)

Plusieurs compositions (1 à 4) sont préparées en mélangeant du sable, du ciment, de l'argile, de l'eau, un superplastifiant et un polymère cationique hydrosoluble pendant 5 minutes. Les proportions des différents composants sont regroupées dans le tableau 1, ainsi que les résultats du test d'écoulement de la composition.

Tableau 1 : Caractéristiques de quatre compositions comprenant des polymères cationiques hydrosolubles et résultats du test d'étalement du béton.

| Composition | 1 | 2 | 3 | 4 |
|---|---|---|---|---|
| Ciment (g) | 450 | 450 | 450 | 450 |

(suite)

| Composition | 1 | 2 | 3 | 4 |
|---|---|---|---|---|
| Eau (g) | 202,5 | 202,5 | 202,5 | 202,5 |
| Sable (g) | 1350 | 1350 | 1350 | 1350 |
| Argile (g) | 9,45 | 9,45 | 9,45 | 9,45 |
| Superplastifiant (g) | 7,5 | 7,5 | 7,5 | 7,5 |
| Type de polymère cationique | - | Polymère B (selon l'invention) | Polymère D (selon l'invention) | CMA-2 du brevet US2015/0065614 (comparatif) |
| Polymère cationique (g) | 0 | 0,189 | 0,199 | 0,189 |
| Etalement du béton (mm) | 240 | 310 | 320 | 310 |

D'après le tableau 1, les polymères cationiques hydrosolubles permettent un gain sur l'écoulement des bétons d'environ 30%. Les polymères cationiques avec des teneurs en halogénures réduites (polymères B et D) et issus du précédé de l'invention ont des performances similaires ou supérieures au polymère cationiques de l'état de la technique US 2015/0065614).

Selon les exemples de US 2015/0065614, le polymère CMA-2 est caractérisé par une densité de charge cationique de 7,2 méq/g, un taux de chlorure de 25 % en masse de polymère et une viscosité de 8,4 cps, cette viscosité étant déterminée pour une solution aqueuse de polymère concentrée à 50% en masse.

Ainsi, la diminution de la teneur en halogénures dans le polymère cationique hydrosoluble n'entraîne pas la perte d'activité de ce polymère.

Exemple 4: Test de la corrosion induite par différents polymères cationiques

Le test consiste en l'immersion de coupons métalliques de différentes nuances/alliages dans des solutions de polymères cationiques. Une évaluation qualitative de la corrosion est réalisée selon une échelle allant de 0 à 10 :

- 0 = pas de corrosion observée
- 3 = Quelques points de corrosion (type piqûre) sont observés
- 5 = Attaque modérée de l'ensemble du coupon métallique
- 7 = Attaque sévère de l'ensemble du coupon métallique
- 10 = Attaque complète de l'ensemble du coupon métallique.

Les coupons métalliques ont les dimensions suivantes: Longueur: 100mm, Largeur: 30mm, épaisseur: 1mm. Avant utilisation, les coupons métalliques sont nettoyés pour enlever tout solide et sont lavés avec de l'acétone afin d'enlever tout résidu d'huile sur leur surface. Ils sont alors plongés dans un récipient contenant une solution aqueuse d'un polymère cationique à 50% en masse pour y rester immergés pendant 14 jours à 30°C.

Les résultats de ce test de corrosion menés sur deux aciers différents et en présence de quatre polymères cationiques hydrosolubles différents (comparatif et selon l'invention) en solution sont présentés dans le tableau 2.

Tableau 2 : Evaluation de la corrosion induite par différents polymères cationiques

| Polymère cationique | Nuance d'acier | % massique de chlorures dans le polymère | Evaluation de la corrosion |
|---|---|---|---|
| Polymère B (comparatif) | Acier carbone | 8 | 4 |
| Polymère D (selon l'invention) | Acier carbone | 7 | 4 |
| CMA-2 (US 2015/0065614) (comparatif) | Acier carbone | 26 | 8 |
| Polymère C (comparatif) | Acier carbone | 22 | 7 |

(suite)

| Polymère cationique | Nuance d'acier | % massique de chlorures dans le polymère | Evaluation de la corrosion |
|---|---|---|---|
| Polymère B (selon l'invention) | Inox 304L | 8 | 1 |
| Polymère D (selon l'invention) | Inox 304L | 7 | 1 |
| CMA-2 (US 2015/065614) (comparatif) | Inox 304L | 26 | 5 |

Le tableau 2 montre que sur un acier carbone, les polymères cationiques hydrosolubles P1 issus du procédé selon l'invention (polymères B et D) induisent une corrosion réduite et deux fois moins importante en comparaison aux polymères présentant une teneur en halogénures supérieure (polymères C et CMA-2).

Ainsi, l'utilisation des polymères P1 selon l'invention induit clairement une corrosion réduite en comparaison à l'utilisation des polymères de l'état de la technique.

Les mêmes observations peuvent être faites en ce qui concerne l'utilisation de polymères cationiques sur un Inox 304L.

## Revendications

1. Procédé d'obtention d'une solution aqueuse de polymères cationiques hydrosolubles P1 dont la teneur en halogénures est inférieure à 10% en masse de polymère, la viscosité à 25°C est inférieure à 200 cps, cette viscosité étant déterminée pour une solution aqueuse de polymères P1 concentrée à 50% en masse au moyen d'un appareil équipé d'un module cône plan 2°, comprenant 2,3 mL d'une solution de polymère P1 dans une cellule de mesure régulée à 25°C et dont le cisaillement est 7,34 s$^{-1}$, la viscosité étant la moyenne de 10 mesures de viscosité réalisées toutes les 20 secondes, et la densité de charge cationique est supérieure ou égale à 4 méq.g$^{-1}$, **caractérisé en ce qu'**il comprend les étapes successives suivantes :

   a) l'addition, à une température comprise entre 0°C et 120°C, d'au moins un composé de formule (I) à une solution aqueuse d'au moins un polymère cationique hydrosoluble P2 dont la teneur en halogénures est supérieure à 10% en masse de polymère, la viscosité à 25°C est inférieure à 200 cps, cette viscosité étant déterminée pour une solution aqueuse de polymères P2 concentrée à 50% en masse, et la densité de charge cationique supérieure ou égale à 4 méq.g$^{-1}$, le composé de formule (I) étant défini par la formule : $R^1\text{-COO}^-\ Y_1^+$, avec :

   - $R^1$ représente un atome d'hydrogène ou une chaine alkyle saturée, linéaire ou ramifiée, comprenant de 1 à 8 atomes de carbone, pouvant contenir au moins un atome d'azote et/ou d'oxygène, ladite chaîne pouvant en outre être substituée par 1 à 4 fonctions carboxylates de formule -COR;
   - $Y_1^+$ représente un cation de métal alcalin, un ammonium de formule $R^2\text{-NH}_3^+$ ou un ammonium quaternaire de formule $R^3\text{-N}^+(R^4)(R^5)(R^6)$ ;
   - R représente un groupement OH ou un groupe $O^-Y_2^+$;
   - $Y_2^+$ représente un cation de métal alcalin ou un ammonium de formule $R^2\text{-NH}_3^+$;
   - $R^2$ représente un atome d'hydrogène ou une chaîne alkyle saturée, linéaire ou ramifiée, comprenant de 1 à 4 atomes de carbone ; et
   - $R^3$, $R^4$, $R^5$ et $R^6$ représentent, indépendamment les uns des autres, une chaîne alkyle saturée, linéaire ou ramifiée et comprenant de 1 à 4 atomes de carbone ;

   pour obtenir un mélange ;
   b) l'agitation du mélange obtenu à l'étape a) pendant au moins 5 min pour obtenir un mélange agité ;
   c) la diminution de la température du mélange agité obtenu à l'issue de l'étape b) à une température comprise entre -10°C et 50°C pour obtenir un mélange refroidi ; et
   d) la séparation liquide/solide du mélange refroidi obtenu à l'issue de l'étape c) afin d'obtenir une solution aqueuse de polymère cationique P1.

2. Procédé selon la revendication 1, dans lequel les polymères cationiques hydrosolubles P1 sont **caractérisés par** une densité de charge cationique supérieure ou égale à 5 méq.g$^{-1}$.

3. Procédé selon l'une des revendications 1 ou 2, dans lequel les polymères cationiques hydrosolubles P1 sont **caractérisés par** une teneur en masse de composés insolubles inférieure à 2% par rapport à la masse totale de polymère.

4. Procédé selon l'une des revendications 1 à 3, dans lequel dans l'étape a) le rapport du nombre de charges anioniques du composé de formule (I) sur le nombre de charges cationiques du polymère cationique hydrosoluble P2 est compris entre 0,2:1 et 5:1, de préférence entre 0,6:1 et 2:1.

5. Procédé selon l'une des revendications 1 à 4, dans lequel le polymère cationique hydrosoluble P2 est **caractérisé par** une densité de charge cationique supérieure ou égale à 6 méq.g$^{-1}$.

6. Procédé selon l'une des revendications 1 à 5, dans lequel le composé de formule (I) est choisi parmi le formate de sodium, le formate de potassium, l'acétate de sodium et l'acétate de potassium, de préférence parmi le formate de potassium et l'acétate de potassium.

7. Procédé selon l'une des revendications 1 à 6, dans lequel l'étape de séparation liquide/solide d) est une décantation ou une filtration, de préférence une filtration.

8. Procédé selon l'une des revendications 1 à 7, dans lequel le polymère cationique hydrosoluble P2 est issu de la polymérisation d'au moins un monomère de type halogénure de diallyldialkylammonium.

9. Procédé selon l'une des revendications 1 à 8, dans lequel le polymère cationique hydrosoluble P2 est issu de la polymérisation d'au moins du chlorure de diallyldiméthylammonium.

10. Procédé selon l'une des revendications 1 à 7, dans lequel le polymère cationique hydrosoluble P2 est un polymère issu de la polycondensation d'au moins une épihalohydrine et d'au moins une amine secondaire.

11. Procédé selon l'une des revendications 1 à 7, dans lequel le polymère cationique hydrosoluble P2 est un polymère issu de la polycondensation de l'épichlorhydrine et de la diméthylamine.

12. Procédé selon la revendication 11, dans lequel le ratio stœchiométrique entre la diméthylamine et l'épichlorhydrine est compris entre 1:0,99 et 1:0,80, préférentiellement entre 1 :0,95 et 1 :0,85.

13. Procédé selon l'une des revendications 1 à 12, dans lequel les polymères cationiques hydrosolubles P1 sont **caractérisés par** une densité de charge cationique supérieure ou égale à 6 méq.g$^{-1}$.

14. Utilisation d'un polymère cationique hydrosoluble P1 susceptible d'être obtenu par le procédé selon l'une des revendications 1 à 13, comme additifs dans des compositions à base de liants minéraux ou de dérivés de gypse, ou dans le traitement des circuits aqueux fermés ou semi-fermés.

15. Utilisation d'un polymère cationique hydrosoluble P1 susceptible d'être obtenu par le procédé selon la revendication 13, ledit polymère cationique hydrosoluble P1 étant **caractérisé par** une densité de charge cationique supérieure ou égale à 6 méq.g$^{-1}$, comme agent de modération de l'effet des argiles dans une composition à base de liants minéraux ou de dérivés de gypse.

**Patentansprüche**

1. Verfahren zum Erhalten einer wässrigen Lösung von kationischen, wasserlöslichen Polymeren P1, wovon der Halogengehalt geringer als 10 Gew.-% des Polymers ist, die Viskosität bei 25 °C geringer als 200 cps ist, wobei diese Viskosität ermittelt ist für eine wässrige, auf 50 Gew.-% konzentrierte Lösung der Polymere P1 mittels einer Vorrichtung, die mit einem Kegel-Platte-Modul 2° ausgestattet ist, 2,3 mL einer Lösung des Polymers P1 in einer Messzelle aufweist, die auf 25 °C reguliert ist und deren Scherung 7,34 s$^{-1}$ beträgt, wobei die Viskosität der Mittelwert von 10 Viskositätsmessungen ist, die alle 20 Sekunden durchgeführt werden, und die kationische Ladungsdichte größer oder gleich 4 meq.g$^{-1}$ ist, **dadurch gekennzeichnet, dass** es die nachfolgenden, aufeinanderfolgenden Schritte aufweist:

a) Zufügen, bei einer Temperatur zwischen 0 °C und 120 °C, von wenigstens einer Verbindung der Formel (I) zu einer wässrigen Lösung wenigstens eines kationischen, wasserlöslichen Polymers P2, wovon der Halogengehalt größer als 10 Gew.-% des Polymers ist, die Viskosität bei 25 °C geringer ist als 200 cps, wobei diese Viskosität ermittelt ist für eine wässrige, auf 50 Gew-% konzentrierte Lösung von Polymeren P2, und die kationische Ladungsdichte größer oder gleich 4 meq.g$^{-1}$ ist, wobei die Verbindung der Formel (I) mittels der Formel: $R^1$-COO-$Y_1^+$ definiert ist, wobei:

- $R^1$ ein Wasserstoffatom oder eine gesättigte, lineare oder verzweigte Alkylkette mit 1 bis 8 Kohlenstoffatomen darstellt, welche wenigstens ein Stickstoff- und/oder Sauerstoffatom enthalten kann, wobei besagte Kette weiterhin mittels 1 bis 4 Carboxylatfunktionalitäten der Formel -COR substituiert sein kann,
- $Y_1^+$ ein Alkalimetallkation, ein Ammonium der Formel $R^2$-$NH_3^+$ oder ein quarternäres Ammonium der Formel $R^3$-$N^+$($R^4$)($R^5$)($R^6$) darstellt,
- R eine OH-Gruppe oder eine O$^-$$Y_2^+$-Gruppe darstellt,
- $Y_2^+$ ein Alkalimetallkation oder ein Ammonium der Formel $R^2$-$NH_3^+$ darstellt,
- $R^2$ ein Wasserstoffatom oder eine gesättigte, lineare oder verzweigte Alkylkette mit 1 bis 4 Kohlenstoffatomen darstellt und
- $R^3$, $R^4$, $R^5$ und $R^6$ unabhängig voneinander eine gesättigte, lineare oder verzweigte Alkylkette mit 1 bis 4 Kohlenstoffatomen darstellen,

zum Erhalten einer Mischung,

b) Rühren der in Schritt a) erhaltenen Mischung für wenigstens 5 Minuten zum Erhalten einer gerührten Mischung
c) Verringern der Temperatur der aus Schritt b) erhaltenen gerührten Mischung auf eine Temperatur zwischen -10 °C und 50 °C zum Erhalten einer abgekühlten Mischung und
d) flüssig/fest-Trennen der aus Schritt c) erhaltenen, abgekühlten Mischung, um eine wässrige Lösung von kationischem Polymer P1 zu erhalten.

2. Verfahren gemäß Anspruch 1, wobei die kationischen, wasserlöslichen Polymere P1 durch eine kationische Ladungsdichte charakterisiert sind, die größer oder gleich 5 meq.g$^{-1}$ ist.

3. Verfahren gemäß Anspruch 1 oder 2, wobei die kationischen, wasserlöslichen Polymere P1 durch einen Massengehalt an unlöslichen Verbindungen gekennzeichnet sind, der geringer als 2% ist bezogen auf die Gesamtmasse des Polymers.

4. Verfahren gemäß einem der Ansprüche 1 bis 3, wobei in Schritt a) das Verhältnis der Anzahl der anionischen Ladungen der Verbindung der Formel (I) über der Anzahl an kationischen Ladungen des kationischen, wasserlöslichen Polymers P2 zwischen 0,2:1 und 5:1 liegt, vorzugsweise zwischen 0,6:1 und 2:1.

5. Verfahren gemäß einem der Ansprüche 1 bis 4, wobei das kationische, wasserlösliche Polymer P2 durch eine kationische Ladungsdichte gekennzeichnet ist, die größer oder gleich 6 meq.g$^{-1}$ ist.

6. Verfahren gemäß einem der Ansprüche 1 bis 5, wobei die Verbindung der Formel (I) ausgewählt ist aus Natriumformiat, Kaliumformiat, Natriumacetat und Kaliumacetat, vorzugsweise aus Kaliumformiat und Kaliumacetat.

7. Verfahren gemäß einem der Ansprüche 1 bis 6, wobei der Schritt des flüssig/fest-Trennens d) eine Dekantierung oder eine Filtration ist, vorzugsweise eine Filtration.

8. Verfahren gemäß einem der Ansprüche 1 bis 7, wobei das kationische, wasserlösliche Polymer P2 aus der Polymerisation von wenigstens einem Monomer des Typs Diallyldialkylammoniumhalogenid stammt.

9. Verfahren gemäß einem der Ansprüche 1 bis 8, wobei das kationische, wasserlösliche Polymer P2 aus der Polymerisation von wenigstens Diallyldimethylammoniumchlorid stammt.

10. Verfahren gemäß irgendeinem der Ansprüche 1 bis 7, wobei das kationische, wasserlösliche Polymer P2 ein Polymer ist, das aus der Polykondensation von wenigstens einem Epihalohydrin und wenigstens einem sekundären Amin stammt.

11. Verfahren gemäß einem der Ansprüche 1 bis 7, wobei das kationische, wasserlösliche Polymer P2 ein Polymer ist, das aus der Polykondensation von Epichlorhydrin und Dimethylamin stammt.

**12.** Verfahren gemäß Anspruch 11, wobei das stöchiometrische Verhältnis zwischen Dimethylamin und Epichlorhydrin zwischen 1:0,99 und 1:0,80 liegt, vorzugsweise zwischen 1:0,95 und 1:0,85.

**13.** Verfahren gemäß einem der Ansprüche 1 bis 12, wobei die kationischen, wasserlöslichen Polymere P1 durch eine kationische Ladungsdichte charakterisiert sind, die größer oder gleich 6 meq.g$^{-1}$ ist.

**14.** Verwendung eines kationischen, wasserlöslichen Polymers P1, welches dazu geeignet ist, mittels des Verfahrens gemäß einem der Ansprüche 1 bis 13 erhalten zu werden, als Zusatzstoff in Zusammensetzungen auf Basis von mineralischen Bindemitteln oder Gipsderivaten oder in der Behandlung von geschlossenen oder halb-geschlossenen, wässrigen Kreisläufen.

**15.** Verwendung eines kationischen, wasserlöslichen Polymers P1, welches dazu geeignet ist, mittels des Verfahrens gemäß Anspruch 13 erhalten zu werden, wobei besagtes kationisches, wasserlösliches Polymer P1 durch eine kationische Ladungsdichte charakterisiert ist, die größer oder gleich 6 meq.g$^{-1}$ ist, als Moderationsmittel des Toneffekts in einer Zusammensetzung auf Basis von mineralischen Bindemitteln oder Gipsderivaten.

**Claims**

**1.** Method for obtaining an aqueous solution of water-soluble cationic polymers P1 wherein the halides content is lower than 10% by weight of the polymer, the viscosity at 25°C is lower than 200 cps, said viscosity being determined for an aqueous solution of polymers P1 concentrated at 50% by weight by means of an apparatus equipped with a 2° cone-plate module, comprising 2.3 mL of a solution of polymers P1 in a measuring cell controlled at 25°C and whereof the shear is 7.34 s$^{-1}$, the viscosity being the average of 10 viscosity measurements performed every 20 seconds, and the cationic charge density is greater than or equal to 4 meq.g$^{-1}$, **characterized in that** it comprises the following successive steps:

a) adding, at a temperature comprised between 0°C and 120°C, of at least one compound of formula (I) to an aqueous solution of at least one water soluble cationic polymer P2 wherein the halides content is greater than 10% by weight of the polymer, the viscosity at 25°C is lower than 200 centipoise, said viscosity being determined for an aqueous solution of polymers P2 concentrated to 50% by weight, and the cationic charge density being greater than or equal to 4 meq.g$^{-1}$, the compound of formula (I) being defined by the formula: $R^1$-COO$^-$$Y_1$$^+$, wherein:

- $R^1$ represents a hydrogen atom or a saturated alkyl chain, either linear or branched, comprising from 1 to 8 carbon atoms, that may contain at least one nitrogen atom and/or oxygen atom, said chain may be substituted by 1 to 4 carboxylate functional groups of formula -COR;
- $Y_1$$^+$ represents an alkali metal cation, an ammonium ion of formula $R^2$-NH$_3$$^+$, or a quaternary ammonium of formula $R^3$-N$^+$($R^4$)($R^5$)($R^6$);
- R represents an OH group or a group O$^-$$Y_2$$^+$;
- $Y_2$$^+$ represents an alkali metal cation or an ammonium ion of formula $R^2$-NH$_3$$^+$;
- $R^2$ represents a hydrogen atom or a saturated alkyl chain, either linear or branched, comprising from 1 to 4 carbon atoms; and
- $R^3$, $R^4$, $R^5$ and $R^6$ represent, independently of each other, a saturated alkyl chain, either linear or branched, comprising from 1 to 4 carbon atoms;

in order to obtain a mixture;
b) stirring of the mixture obtained in step a) for at least 5 minutes in order to obtain a stirred mixture;
c) decreasing of the temperature of the stirred mixture obtained at the end of step b) at a temperature comprised between -10°C and 50°C in order to obtain a cooled mixture; and
d) liquid/solid separation of the cooled mixture obtained at the end of step c) in order to obtain an aqueous solution of cationic polymers P1.

**2.** Method according to claim 1, wherein the water-soluble cationic polymers P1 are **characterised by** a cationic charge density greater than or equal to 5 meq.g$^{-1}$.

**3.** Method according to one of claims 1 or 2, in which the water-soluble cationic polymers P1 are **characterised by** a content by weight of insoluble compounds lower than 2% relative to the total weight of the polymer.

**4.** Method according to one of claims 1 to 3, in which in step a) the ratio of the number of anionic charges of the compound of formula (I) to the number of cationic charges of the water-soluble cationic polymer P2 is comprised between 0.2:1 and 5:1, preferably between 0.6:1 and 2:1.

**5.** Method according to one of claims 1 to 4, in which the water soluble cationic polymer P2 is **characterised by** a cationic charge density greater than or equal to 6 meq.g$^{-1}$.

**6.** Method according to one of claims 1 to 5, in which the compound of formula (I) is selected from among sodium formate, potassium formate, sodium acetate and potassium acetate, preferably from potassium formate and potassium acetate.

**7.** Method according to one of claims 1 to 6, in which liquid/solid separation step d) is a decantation or filtration process, preferably a filtration process.

**8.** Method according to one of claims 1 to 7, in which the water soluble cationic polymer P2 is derived from the polymerisation of at least one monomer of such type as diallyldialkyl ammonium halide.

**9.** Method according to one of claims 1 to 8, in which the water soluble cationic polymer P2 is derived from the polymerization of at least diallyl dimethyl ammonium chloride.

**10.** Method according to one of claims 1 to 7, in which the water soluble cationic polymer P2 is a polymer that is derived from the polycondensation of at least one epihalohydrin and at least one secondary amine.

**11.** Method according to one of claims 1 to 7, in which the water soluble cationic polymer P2 is a polymer that is derived from the polycondensation of epichlorohydrin and dimethylamine.

**12.** Method according to claim 11, in which the stoichiometric ratio between dimethylamine and epichlorohydrin is comprised between 1:0.99 and 1:0.80, preferably between 1:0.95 and 1:0.85.

**13.** Method according to one of claims 1 to 12, in which the water-soluble cationic polymers P1 are **characterized by** a cationic charge density that is greater than or equal to 6 meq.g$^{-1}$.

**14.** Use of a water soluble cationic polymer P1 that is likely to be obtained by the method according to one of claims 1 to 13, as additives in compositions that are based on inorganic mineral binders or on gypsum derivatives, or in the treatment of closed or semi-closed aqueous circuits.

**15.** Use of a water soluble cationic polymer P1 that is likely to be obtained by the method according to claim 13, said water soluble cationic polymer P1 being **characterized by** a cationic charge density greater than or equal to 6 meq.g$^{-1}$, as a moderating agent for moderating the effect of clays in a composition based on inorganic mineral binders or on gypsum derivatives.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3738945 A
- US 3725312 A
- US 4057580 A
- US 6352952 B
- US 20130035417 A
- EP 2414460 A
- US 8906986 B
- US 20150065614 A
- WO 2008000766 A
- US 4569991 A

**Littérature non-brevet citée dans la description**

- Corrosion of Steel in Concrete: Prevention, Diagnosis, Repair. Luca Bertolini